# FASCICULE DE BREVET EUROPEEN

(11) **EP 3 078 071 B1**
(45) Date de publication et mention de la délivrance du brevet: **28.11.2018**
(21) Numéro de dépôt: 14821853.0
(22) Date de dépôt: 02.12.2014
(51) Int. Cl.: H01M 8/028, H01M 8/0286, C25B 1/08, C25B 9/20, H01M 8/124

(54) **JOINT D'ÉTANCHÉITÉ POUR DISPOSITIF ÉLECTROCHIMIQUE, PROCÉDÉ DE FABRICATION ET D'ASSEMBLAGE DU JOINT ET CE DISPOSITIF**
DICHTUNG FÜR EINE ELEKTROCHEMISCHE VORRICHTUNG, VERFAHREN ZUR HERSTELLUNG UND BEFESTIGUNG DER DICHTUNG UND DIESER VORRICHTUNG
SEAL FOR AN ELECTROCHEMICAL DEVICE, PROCESS FOR MANUFACTURING AND FITTING THE SEAL AND THIS DEVICE

(30) Priorité: 04.12.2013 FR 1362100
(43) Date de publication de la demande: 12.10.2016
(73) Titulaire: Commissariat à l'Énergie Atomique et aux Énergies Alternatives, 75015 Paris (FR)
(72) Inventeur: DI IORIO, Stéphane, F-38250 Lans-en-vercors (FR); ORESIC, Bruno, F-38210 Tullins (FR); PETIT, Julien, 62223 Anzin Saint Aubin (FR); REYTIER, Magali, F-38250 Villard De Lans (FR)
(74) Mandataire: Gevers & Orès
(86) Numéro de dépôt international: PCT/IB2014/066518
(87) Numéro de publication internationale: WO 2015/083076

(56) Documents cités:
- FR-A1- 2 988 916
- US-A1- 2004 048 137
- US-A1- 2010 285 394
- CHOU Y-S ET AL: "COMPRESSIVE MICA SEALS FOR SOLID OXIDE FUEL CELLS", JOURNAL OF MATERIALS ENGINEERING AND PERFORMANCE, ASM INTERNATIONAL, MATERIALS PARK, OH, US, vol. 15, no. 4, 1 août 2006 (2006-08-01), pages 414-421, XP001540102, ISSN: 1059-9495, DOI: 10.1361/105994906X117215
- CHOU Y-S ET AL: "Thermal cycle stability of a novel glass-mica composite seal for solid oxide fuel cells: Effect of glass volume fraction and stresses", JOURNAL OF POWER SOURCES, ELSEVIER SA, CH, vol. 152, 9 juin 2005 (2005-06-09), pages 168-174, XP027756600, ISSN: 0378-7753 [extrait le 2005-12-01]
- FERGUS J.W. ET AL: "Sealants for solid oxide fuel cells", JOURNAL OF POWER SOURCES, ELSEVIER SA, CH, vol. 147, no. 1-2, 6 juin 2005 (2005-06-06), pages 46-57, XP027756688, ISSN: 0378-7753 [extrait le 2005-09-09]

## Description

La présente invention concerne un joint d'étanchéité utilisable dans un dispositif électrochimique, un procédé de fabrication et d'assemblage du joint dans ce dispositif et un tel dispositif. L'invention s'applique notamment à des dispositifs formant des piles à combustibles à oxydes solides (« SOFC » en abrégé en anglais, pour « Solid Oxide Fuel Cell ») et des électrolyseurs de vapeur d'eau à haute température à oxydes solides (« SOEC » en abrégé en anglais, pour « Solid Oxide Electrolyser Cell », ces électrolyseurs à oxydes solides étant des electrolyseurs connus de manière générique en anglais sous les abréviations « HTE » ou « HTSE » respectivement pour « High Temperature Electrolysis » ou « High Temperature Steam electrolysis » et en français EHT ou EVHT).

De manière connue, les dispositifs électrochimiques de type « SOEC » et « SOFC » requièrent pour être performants des étanchéités de haute qualité au sein des différentes chambres qui les composent. Si les étanchéités sont de bonne qualité, alors la totalité du gaz envoyé est utilisée par les dispositifs « SOEC » et la totalité des gaz produits est récupérée pour les « SOEC », et l'on évite en outre pour ces dispositifs de mélanger les gaz utilisés ou produits ce qui pénaliserait fortement la performance et la durabilité de ces dispositifs.

Ces dispositifs électrochimiques comprennent usuellement :
- au moins une cellule constituée d'un assemblage électrode à hydrogène-électrolyte-électrode à oxygène et définissant deux chambres,
- au moins deux éléments de contact électrique avec chaque cellule,
- au moins deux interconnecteurs métalliques qui amènent le courant et distribuent les gaz (e.g. vapeur d'eau, dioxygène, dihydrogène, dioxyde de carbone et éventuellement un gaz vecteur tel que du diazote ou de l'air) aux électrodes et qui assurent la jonction entre deux cellules adjacentes, et
- des joints d'étanchéité électriquement isolants pour éviter tout court-circuit, comprenant des premiers joints assurant l'étanchéité entre les deux chambres de chaque cellule, des deuxièmes joints assurant l'étanchéité entre les amenées de gaz d'entrée et de sortie et des troisièmes joints assurant l'étanchéité du dispositif avec l'extérieur.

Dans un dispositif électrochimique de type « SOEC », la molécule d'eau est dissociée en dihydrogène à l'électrode à hydrogène (cathode), les ions O₂⁻ migrent à travers l'électrolyte pour se recombiner coté électrode à oxygène (anode) en dioxygène. La ou chaque cellule « SOEC » produit ainsi du dihydrogène en dissociant des molécules d'eau.

Dans un dispositif électrochimique de type « SOFC ». l'oxygène est réduit à l'électrode à oxygène (cathode), les ions O2⁻ migrent à travers l'électrolyte. Une réaction d'oxydation a alors lieu à l'électrode à hydrogène (anode) et la ou chaque cellule « SOFC » produit ainsi de l'électricité et de l'eau en combinant dihydrogène et dioxygène.

L'étanchéité des dispositifs « SOEC » et « SOFC » est ainsi un des points les plus critiques en fonctionnement. En effet, si une partie de l'hydrogène produit dans un dispositif « SOEC », par exemple, s'écoule en partie vers l'extérieur du dispositif au lieu d'être totalement récupéré à cause d'un défaut d'étanchéité, le rendement du dispositif est réduit.

De plus, si les deux chambres d'une cellule d'un dispositif « SOEC » ou « SOFC » communiquent entre elles, alors le mélange des gaz qui a lieu conduit à une perte d'efficacité des dispositifs, à des points chauds et à une diminution de leur durée de vie.

Pour les dispositifs « SOEC ». On peut considérer qu'une étanchéité est satisfaisante lorsque 97 % du dihydrogène produit est récupéré en sortie du dispositif, bonne lorsque ce taux de récupération est de 99 % et excellente lorsque ce taux est supérieur à 99,9 %.

En plus du taux de récupération, la qualité d'une étanchéité peut être évaluée en considérant sa résistance aux surpressions. Une étanchéité résistant à 50 mbar (soit 5000 Pa) est convenable, elle est bonne lorsqu'elle résiste à 200 mbar (soit 20000 Pa) et excellente à 500 mbar (soit 50000 Pa). La durée de cette résistance est aussi un paramètre important étant précisé qu'une étanchéité qui ne résiste que quelques minutes n'a que peu d'intérêt, les durées visées étant de l'ordre de plusieurs milliers d'heures.

Il est connu qu'une étanchéité pour des dispositifs « SOEC » ou « SOFC » peut être réalisée à l'aide de joints compressifs, i.e. qui pour réaliser leur fonction d'étanchéité doivent être soumis à des forces de compression déformant ces joints, lesquels en se mettant en place établissent l'étanchéité. Cette déformation des joints peut être réversible (e.g, joint polymère élastique pour les basses températures) ou irréversible (e.g. déformation plastique de matériaux métalliques). Ces joints compressifs sont le plus souvent denses, pouvant être dans ce cas polymériques ou métalliques, ou bien poreux comme par exemple des joints en mica, la force de compression permettant dans ce dernier cas de combler les porosités internes ouvertes du matériau poreux pour éviter les fuites dans son épaisseur.

Un inconvénient majeur des joints compressifs de type métalliques est qu'ils ne garantissent pas une isolation électrique entre les interconnecteurs métalliques, et surtout qu'ils nécessitent des niveaux de charge très élevés pour être efficaces. Quant aux joints compressifs isolants électriques poreux tels que les joints en mica, ils présentent inconvénient de nécessiter des contraintes de compression supérieures à celles tolérées par les empilements « SOFC » et « SOEC » pour obtenir des étanchéités satisfaisantes et ne sont pas étanches dans leur épaisseur. De plus, se pose avec ces joints en mica le problème des coefficients de dilatation des matériaux en contact qui doivent être aussi proches que possible.

Il est par ailleurs connu que l'étanchéité peut être réalisée à l'aide de joints constitués de verre. Des verres spécialement développés pour les applications « SOEC » et « SOFC » sont notamment ceux de la famille G018 (commercialisés par Schott), mis en place et cristallisés à des températures supérieures aux températures de fonctionnement de l'empilement On abaisse ensuite la température à la température de fonctionnement pour que le joint en verre redevienne plus rigide, ce qui lui permet d'être apte à résister aux pressions en fonctionnement.

Un inconvénient majeur de l'utilisation de joints en verre dans des dispositifs « SOEC » et « SOFC » est que si ces joints présentent une épaisseur trop grande, ils ne supporteront pas des surpressions élevées (quelques millibars - i.e. centaines de Pa - suffisent à faire s'écouler un joint en verre de l'ordre de 1 mm d'épaisseur). En effet, il est connu qu'un joint en verre doit présenter l'épaisseur la plus faible possible pour limiter son écoulement sous la pression du fait qu'à sa température d'utilisation, le verre de ce joint n'est jamais complètement solidifié ce qui peut l'amener à s'écouler (i.e. à être « chassé ») sous l'effet d'une pression en vertu des lois d'écoulement d'un fluide entre deux parois avec une vitesse d'écoulement élevée et une durée de résistance aux surpressions réduite en proportion, conduisant alors à une perte d'étanchéité. En conclusion, pour une même surpression, la durée de vie d'un joint en verre sera d'autant plus longue que son épaisseur sera réduite et sa surface d'appui importante. En pratique, le contrôle dimensionnel des joints en verre est complexe puisque est également primordial de garder en contact les parties de l'empilement devant permettre une bonne circulation du courant électrique, i.e. les interconnecteurs, éléments de contact électrique et cellule(s).

Un autre inconvénient de ces joints en verre connus est que si le verre du joint établit une étanchéité entre deux portées métalliques mais est d'épaisseur trop faible, alors on a un risque de court-circuit dans le dispositif du fait que le verre réagit avec le métal des portées pour former des oxydes pouvant devenir conducteurs, comme indiqué dans l'article de V. A. C. Haanappel et al., Behaviour of various glass-ceramic sealants with ferritic steels under simulated SOFC stack conditions, Journal of Power Sources 150 (2005) 86-100.

Comme décrit dans le document EP-A2-2 522 639, il est possible d'utiliser en variante des verres vitrocéramiques qui possèdent une structure pouvant cristalliser avec le temps, ce qui augmente la rigidité du verre. Cette solution n'est cependant pas optimale, car la résistance aux surpressions de ces joints vitrocéramiques peut être insuffisante.

Pour apporter une solution aux problèmes précités de dimensionnement des joints en verre, on a cherché dans un passé récent à combiner dans un même joint composite une couche d'étanchéité en verre et un matériau compressif tel qu'un mica, afin de diminuer les contraintes de compression nécessaires et/ou d'améliorer les résultats obtenus par rapport à un joint constitué de cet unique matériau compressif.

On peut par exemple citer le document US-A1-2009/0311570 qui divulgue un joint composite pour dispositif électrochimique constitué d'un mica étanchéifié par du verre déposé à son contact. Des inconvénients de ce joint composite résident dans les fuites observées dans l'épaisseur du mica, dans la difficulté de contrôler la quantité de verre à déposer du fait que la hauteur entre les portées métalliques soumises à des variations dimensionnelles conditionne l'étalement du verre, et dans la tenue du verre sur le mica qui est en général peu résistante.

On peut également citer le document WO-A1-2005/024280 qui présente un joint composite où le verre est infiltré dans un mica, ce qui améliore les propriétés d'un joint compressif en mica mais présente l'inconvénient de requérir un procédé complexe et très difficile à mettre en oeuvre en raison de la taille réduite des pores du mica qui rend problématique l'infiltration du verre dans les pores d'un mica déjà mis en forme.

On peut en outre citer le document WO-A1-2013/144167 qui présente un joint composite constitué d'un noyau massif et continu en céramique recouvert de verre sur ses deux faces principales, et le document US-A1-2010/0068602 qui présente un joint composite verre/ plaque de support par exemple en mica dans lequel le verre recouvre uniquement les deux faces principales de la plaque, laquelle est éventuellement usinée en surface sur ces deux faces. Un inconvénient de ce dernier joint est qu'il ne permet pas de bloquer les fuites de gaz dans son épaisseur.

On peut enfin citer le document WO-A2-2004/059761 qui présente un joint composite à divers constituants tels que des fibres et de la poudre de céramique, de verre et un liant Un inconvénient de ce joint est qu'il requiert une longue série d'étapes pour être mis en forme et est constitué de constituants qui peuvent polluer les chambres à étanchéifier et dont la diversité confère au joint un coefficient de dilatation non maîtrisé et des risques de rupture.

Un but de la présente invention est de proposer un joint d'étanchéité utilisable pour être monté au contact de deux portées métalliques d'un dispositif électrochimique en particulier de type « SOFC » ou « SOEC », le joint comprenant :
- un moyen d'étanchéification du joint comprenant au moins un matériau de type verre ou vitrocéramique, et
- un moyen de support électriquement isolant qui supporte le moyen d'étanchéification et qui présente deux faces principales parallèles, un bord périphérique externe et un bord périphérique interne, le joint étant apte à être monté contre ces portées par ces faces principales, lesquelles sont recouvertes au moins partiellement du moyen d'étanchéification,
qui remédie notamment à l'ensemble des inconvénients précités en représentant une solution pratique, simple à mettre en oeuvre et peu coûteuse aux problèmes précités et permettant d'obtenir une étanchéité excellente en particulier pour des cellules de superficie élevée pouvant par exemple être de l'ordre de 120 x 1 20 à 150 x 150 mm² et avec des températures de fonctionnement typiquement comprises entre 600 et 900° C.

A cet effet, un joint selon l'invention est tel que le moyen d'étanchéification cloisonne le moyen de support entre ledit bord périphérique interne et ledit bord périphérique externe en s'étendant continûment de l'une desdites faces principales à l'autre à travers le moyen de support, de sorte que le moyen d'étanchéification relie directement ces portées l'une à l'autre.

Par « bord périphérique interne » et « bord périphérique externe », on entend respectivement dans la présente description un bord s'étendant le long des périmètres interne et externe qui peuvent être indépendamment l'un de l'autre elliptiques (par exemple circulaires, s'agissant alors de bords circonférentiels) ou polygonaux (par exemple carrés), à titre exemplatif et non limitatif.

On notera que ce cloisonnement transversal de part en part du moyen de support par le moyen d'étanchéification qui prend ainsi appui sur ces deux portées en regard permet d'étanchéifier les fuites de gaz dans l'épaisseur du joint, de contrôler la quantité du matériau de type verre déposé en gérant ses débordements, de positionner ce matériau exactement là où il est nécessaire et, finalement, de créer une étanchéité métal/ matériau de type verre / métal d'excellente qualité. Grâce à ce cloisonnement étanche du moyen de support, il est possible de réaliser ce dernier en un matériau non étanche tel qu'un matériau poreux, comme cela sera expliqué ci-après.

On notera également que cette structure des joints selon l'invention permet une grande simplicité dans leur mise en place au sein du dispositif électrochimique et requièrent avantageusement un seul constituant procurant une étanchéification satisfaisante, qui est ledit matériau de type verre dont le coefficient de dilatation est très proche de celui des portées métalliques ce qui présente l'avantage de ne pas pénaliser l'étanchéité obtenue par les cycles thermiques.

On notera en outre que ce cloisonnement étanche permet de supprimer les fuites de gaz dans la tranche du matériau du moyen de support. et d'empêcher qu'une oxydation des portées métalliques adjacentes puisse créer un court-circuit dans le dispositif car l'épaisseur du matériau de type verre ou vitrocéramique est importante.

Selon l'invention, le moyen de support comprend un cadre monobloc en un matériau poreux qui est usiné de sorte à définir des surfaces percées à travers le cadre formant au moins un canal traversant de géométrie prédéterminée recevant le moyen d'étanchéification, ledit au moins un canal rempli du moyen d'étanchéification formant au moins une cloison étanche s'étendant continûment de l'une desdites faces principales à l'autre.

On notera que le ou chaque canal ainsi usiné permet de positionner précisément selon une configuration optimale (i.e. exactement aux emplacements prédéterminés requis) le matériau de type verre du moyen d'étanchéification au sein du moyen de support, lequel est avantageusement constitué de ce cadre monobloc, Ce matériau vitreux (ou vitrocéramique, donc en partie cristallin) forme alors une ou des cloison(s) étanche(s) adhérant de manière excellente aux portées métalliques, ce qui augmente la résistance de la ou de chaque cloison. Les dimensions de la ou de chaque cloison étanche (i.e. hauteur transversale mesurée perpendiculairement aux faces principales du cadre et largeur mesurée parallèlement à ces faces) sont complètement maîtrisées puisqu'elles correspondent à celles des perçages ou découpes initialement pratiqués sur le cadre, et l'on peut ainsi réaliser des cloisons présentant chacune une faible largeur (typiquement de 1 mm) ce qui procure un faible encombrement avec la formation de plusieurs cloisons étanches.

On notera également que la ou chaque cloison étanche étant contenue par le matériau du cadre support (mica par exemple), elle doit nécessairement pour s'écouter se glisser entre ce cadre et les portées métalliques en regard. Comme ce glissement est très difficile, on obtient ainsi un confinement du moyen d'étanchéification de type verre qui procure une étanchéité excellente, qu'il est possible de maintenir pour des pressions supérieures à 1 bar (soit supérieures à 10⁵ Pa). Le ou chaque canal percé dans le cadre est adapté pour recevoir le débordement du moyen d'étanchéification lors de la phase de mise en place du ou de chaque joint du dispositif « SOEC » ou « SOFC » selon l'invention à une température supérieure à celle de fonctionnement, ce débordement formant la cloison étanche précitée entre les deux portées métalliques.

Comme cela sera expliqué plus en détail ci-après, on notera en outre qu'un joint selon l'invention peut être préparé avant le montage du dispositif et de son empilement éventuel de cellules.

Selon une autre caractéristique de l'invention, lesdites surfaces dudit au moins un canal peuvent être globalement perpendiculaires auxdites faces principales et s'étendre dans une direction périphérique globalement concentrique auxdits bords périphériques interne et externe, de manière continue ou discontinue le long de ladite direction périphérique, des languettes constituées dudit cadre pouvant être formées de part et d'autre dudit au moins un canal pour relier ce dernier au reste du cadre ou à un autre dit canal adjacent, chaque languette présentant un volume inférieur à celui dudit au moins un canal.

Par « direction périphérique globalement concentrique », on entend dans la présente description une direction entourant ledit bord périphérique interne du cadre sous la forme d'une ou plusieurs lignes droites (e.g, sous forme de tirets et/ou de pointillés), courbes et/ou brisées, vu en section dans un plan interne au cadre parallèle à ses faces principales (i.e. vu dans un plan horizontal médian à l'intérieur du cadre).

On notera que ces languettes sont constituées de parties du cadre non découpées qui permettent de maintenir ce cadre en une seule pièce, évitant ainsi l'assemblage de plusieurs blocs dont le positionnement précis les uns par rapport aux autres serait impossible. Ces languettes sont judicieusement positionnées pour permettre à la fois la tenue mécanique du cadre et la minimisation des fuites de gaz en son sein.

De préférence, lesdites languettes sont décalées angulairement radialement de part et d'autre dudit au moins un canal, par exemple suivant un arrangement en quinconce, de sorte à maximiser la longueur du parcours de gaz distribués par des interconnecteurs formés par lesdites portées et/ou les pertes de charge pour ces gaz à travers ledit matériau poreux dudit cadre.

Par « radialement », on entend dans la présente description une direction au sein du cadre passant sensiblement par le centre du cadre et perpendiculaire à l'axe de symétrie de ce cadre.

Selon un premier mode de réalisation de l'invention, ladite au moins une cloison étanche s'étend de manière continue dans ladite direction périphérique (vu dans un plan horizontal interne au cadre), lesdites languettes s'étendant de part et d'autre dudit au moins un canal respectivement vers ledit bord périphérique externe et vers ledit bord périphérique interne.

Conformément à ce premier mode, un joint selon l'invention peut avantageusement comprendre au moins deux dites cloisons étanches concentriques qui sont reliées deux à deux entre elles par des dites languettes radiales.

Selon un second mode de réalisation de l'invention, ladite au moins une cloison étanche s'étend de manière discontinue dans ladite au moins une direction périphérique (vu dans un plan horizontal interne au cadre) en formant une pluralité de portions de cloisonnement pouvant être reliées deux à deux entre elles dans cette direction périphérique par lesdites languettes.

Conformément à ce second mode, un joint selon l'invention peut avantageusement comprendre :
- au moins deux dites cloisons étanches formées chacune de ladite pluralité de portions de cloisonnement logées dans des dits canaux traversant ledit cadre qui sont usinés suivant des géométries curvilignes, rectilignes (par exemple à l'instar des tirets précités), ondulées et/ou en forme de lignes brisées et qui sont remplis du moyen d'étanchéification, ou bien en variante
- une multitude de dites cloisons étanches qui sont respectivement formées d'une multitude de trous (par exemple à l'instar des pointillés précités) traversant ledit cadre par exemple cylindriques, qui forment des dits canaux usinés à intervalles réguliers entre ledit bord périphérique interne et ledit bord périphérique externe et qui sont remplis du moyen d'étanchéification,

En référence à ce second mode de l'invention, on notera que de nombreuses configurations de lignes peuvent être utilisées, en particulier tous motifs permettant de maximiser la longueur de parcours des gaz circulant dans l'épaisseur du cadre, voire des motifs de type tractais.

Selon une autre caractéristique préférentielle de l'invention, ledit moyen d'étanchéification est à base de verre ou de vitrocéramique (i.e. comprenant majoritairement en poids ou exclusivement une pâte de verre), et ledit moyen de support est constitué d'une feuille usinée en un matériau poreux formant ledit cadre et choisi dans le groupe constitué par les céramiques poreuses et les minéraux poreux, de préférence le mica.

On notera que grâce au cloisonnement étanche du cadre selon la présente invention, il n'est pas nécessaire que ce cadre soit étanche, ce qui permet l'utilisation de matériaux poreux en général, comme :
- des céramiques poreuses (par exemple du Macor qui est une alumine poreuse). En effet, un avantage des céramiques poreuses est qu'elles sont facilement usinables, et en général moins coûteuses quand elles ne sont pas denses à 100 %, ou
- des matériaux poreux minéraux tels que le mica, qui comprend de manière connue le groupe des minéraux afumino-silicatés ayant une structure lamellaire (le mica est relativement stable en température, est un support facile à usiner, peu cher et isolant électrique) et qui existe sous un grand nombre de composés parmi lesquels les plus communs sont les biotites (e.g. de formule K₂(Mg, Fe)₂(OH)₂ (AlSi₃)₁₀), les Fuchsites (i.e, Biotites riche en fer), les Lepidolites (e.g. de formule LiKAl_{z}(OH, F)₂(Si₂0₅)₂), les Muscovites (e.g. de formule KAl₂(OH)₂(AlSi₃O₁₀)) et les Phlogopites (e.g. de formule (KMg₃Al).(OH)Si₄O₁₀),

Un procédé de fabrication et d'assemblage selon l'invention d'un joint tel que défini ci-dessus dans un dispositif électrochimique en particulier de type pile à combustible à oxyde solide (« SOFC ») ou électrolyseur de vapeur d'eau à haute température à oxyde solide (« SOEC »), comprend :
a) un usinage du moyen de support pour percer ledit au moins un canal entre ledit bord périphérique interne et ledit bord périphérique externe qui s'étend continûment de l'une desdites faces principales à l'autre à travers le moyen de support,
b) un dépôt du moyen d'étanchéification, tel qu'une pâte de verre (encore appelée « barbotine »), sur lesdites faces principales et dans ledit au moins un canal pour l'obtention d'une ébauche du joint avant assemblage,
c) un assemblage du joint au sein d'un empilement d'au moins une cellule du dispositif à une température comprise entre 600° C et 900° C et sous une pression appliquée de plusieurs kPa, pour faire fondre le moyen d'étanchéification tout en le mettant en place.

On notera que l'utilisation selon l'invention d'une pièce unique formant chaque joint d'étanchéité permet une mise en place en une seule étape à la fois de presque tous les joints d'un étage de l'empilement lors du montage du dispositif électrochimique de l'invention,

Un dispositif électrochimique de type pile à combustible à oxyde solide (« SOFC ») ou électrolyseur de vapeur d'eau à haute température à oxyde solide (« SOEC ») selon l'invention comprend :
- au moins une cellule qui comprend un assemblage électrode à hydrogène-érectrolyte-électrode à oxygène et qui délimite deux chambres,
- au moins deux éléments de contact électrique avec ladite au moins une cellule respectivement positionnés en contact avec lesdites électrodes,
- au moins deux portées métalliques formant des interconnecteurs qui distribuent dans ladite au moins une cellule un courant électrique et des gaz tels que de la vapeur d'eau, du dioxygène, du dihydrogène et éventuellement un gaz vecteur et qui, dans le cas de plusieurs dites cellules, assurent la jonction entre ces dernières, et
- des joints d'étanchéité qui sont chacun montés au contact d'une paire de dits interconnecteurs,
et ce dispositif est caractérisé en ce qu'au moins l'un de ces joints est tel que défini ci-dessus en relation avec la présente invention.

Avantageusement, l'ensemble desdits joints sont électriquement isolants, ces joints comprenant des premiers joints assurant l'étanchéité entre les chambres de ladite au moins une cellule, des deuxièmes joints assurant l'étanchéité entre des amenées respectives de gaz d'entrée et de gaz de sortie et des troisièmes joints assurant l'étanchéité de ladite au moins une cellule avec l'atmosphère l'extérieure, lesdits deuxièmes et troisièmes joints étant selon l'invention telle que définie ci-dessus.

D'autres caractéristiques, avantages et détails de la présente invention ressortirait à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique partielle en demi-section transversale (dans un plan vertical) d'un dispositif électrochimique « SOEC » ou « SOFC » montrant un exemple d'emplacement typique de joints d'étanchéité selon l'invention dans ce dispositif,
la figure 2 est une vue schématique partielle en demi-section transversale montrant une première phase de la préparation d'un joint composite selon l'invention par exemple inclus dans le dispositif de la figure 1 et monté au contact de deux interconneeteurs,
la figure 3 est une vue schématique partielle en demi-section transversale montrant une phase ultérieure de la préparation du joint de la figure 2 au contact des deux interconnecteurs,
la figure 4 est une vue schématique en coupe horizontale d'un joint selon ledit second mode de l'invention, dans un plan de coupe interne au joint qui est parallèle aux faces principales de ce dernier,
les figures 5 et 6 sont chacune une photographie d'une moitié d'un joint selon ledit premier mode de l'invention montrant à la figure 5 le remplissage d'un canal circulaire du cadre de support par le moyen d'étanchéification et à la figure 6 le remplissage d'un autre canal adjacent,
la figure 7 est une photographie identique à la figure 6 mais illustrant en outre schématiquement par une flèche l'intérêt des languettes du cadre décalées angulairement pour le parcours des gaz à travers le joint,
les figures 8, 9, 10 et 11 sont des vues schématiques en coupe horizontale de différentes variantes d'un joint selon ledit second mode de l'invention, dans un plan de coupe interne au joint qui est parallèle aux faces principales de ce dernier,
la figure 12 est une vue schématique en coupe horizontale d'une variante d'un joint selon ledit premier mode de l'invention, dans un plan de coupe interne au joint qui est parallèle aux faces principales de ce dernier,
la figure 13 est un graphique montrant une courbe courant - tension (IV) d'un essai sur un dispositif « SOEC » avec une cellule de 120 x 120 mm² équipée d'un joint selon la figure 2 à cadre en mica rempli de verre,
la figure 14 est un graphique montrant les débits massiques de dihydrogène produit et récupéré en fonction du temps par ce joint mica; verre de la figure 12, sous une surpression de 500 mbar (50000 Pa) pour la cellule « SOEC », et
la figure 15 est une photographie en coupe horizontale de l'intérieur d'un joint analogue à celui de la figure 12, après démontage de la cellule « SOEC » suite à son fonctionnement pour Illustrer l'effet barrière aux gaz dioxygène et dihydrogène des deux cloisons de verre de ce joint.

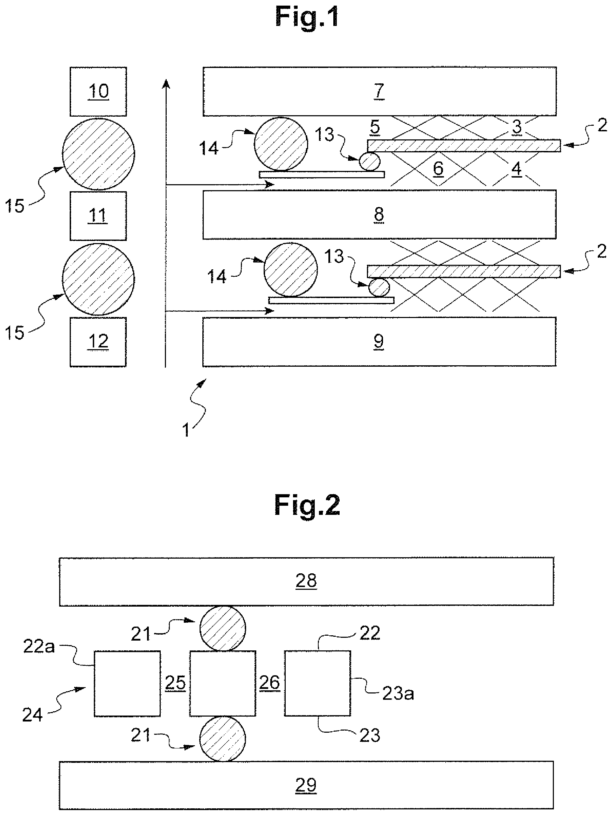

Le dispositif électrochimique 1 illustré partiellement à l'exemple de la figure 1 comprend :
- des cellules 2 constituées chacune d'un assemblage électrode à hydrogène-èlectrolyte-électrode à oxygène (non illustré),
- des éléments de contact électrique 3 et 4 avec chaque cellule 2 délimitant deux chambres 5 et 6 pour celle-ci,
- des interconnecteurs métalliques 7, 8, 9. 10, 11, 12 qui amènent le courant et distribuent les gaz (e.g, vapeur d'eau, dioxygène, dihydrogène, et éventuellement un gaz vecteur tel que du diazote ou de l'air) aux électrodes et qui assurent la jonction entre deux cellules 2 adjacentes, et
- des joints d'étanchéité 13, 14, 15 électriquement isolants pour éviter tout court-circuit, comprenant des premiers joints 13 assurant l'étanchéité entre les deux chambres 5 et 6 de chaque cellule 2, des deuxièmes joints 14 assurant l'étanchéité entre les amenées de gaz d'entrée et de sortie et des troisièmes joints 15 assurant l'étanchéité du dispositif avec l'extérieur.

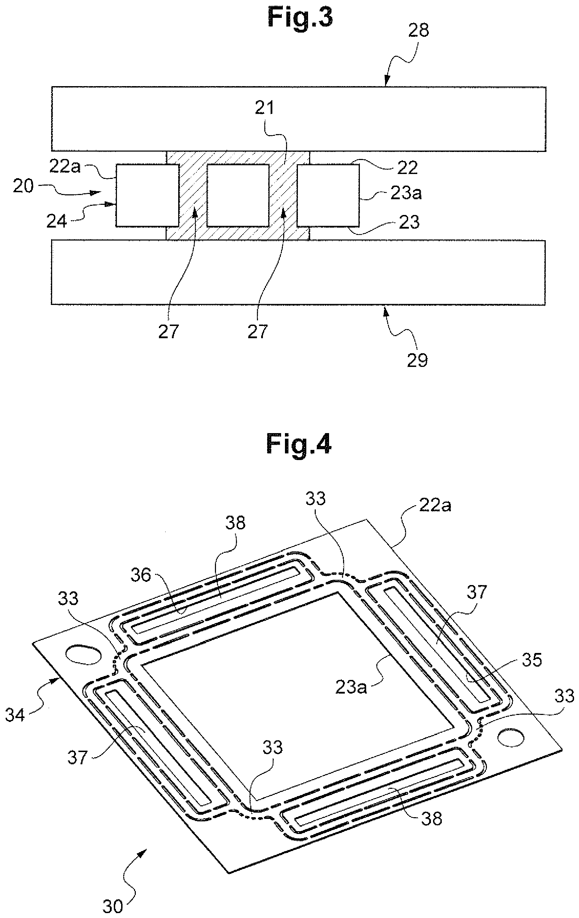

Comme visible aux figures 2 et 3, on réalise un joint 20 selon l'invention en déposant un moyen d'étanchéification 21, avantageusement constitué d'une pâte de verre, sur les deux faces principales parallèles 22 et 23 d'un cadre monobloc 24 isolant électrique sous forme de feuille par exemple en mica (les faces 22 et 23 du cadre 24 sont reliées entre elles par un bord périphérique externe 22a et un bord périphérique interne 23a). Selon l'invention, cette feuille 24 est préalablement usinée de sorte à y percer une ou plusieurs ouverture(s) traversante(s) 25, 26 de géométrie(s) prédéterminée(s) qui débouchent sur ces deux faces 22 et 23. Le verre 21 ainsi déposé vient remplir les ouvertures 25, 26 du cadre 24 pour y former des cloisons étanches de verre 27 prenant appui sur les interconnecteurs 28 et 29, tels que ceux précités en référence au dispositif 1 de la figure 1 .

Comme visible à la figure 4, des languettes 33 constituées de parties non découpées (visibles en tirets blancs) d'un joint 30 à cadre 34 selon l'invention permettent de maintenir le cadre 34 en une seule pièce . Si la découpe (représentée en blanc par des ouvertures 35, 36 de section rectangulaire remplies du verre d'étanchéification 37, 38) était continue, il y aurait en effet dans cet exemple de réalisation six pièces à assembler au lieu d'une seule et leur positionnement précis les unes par rapport aux autres serait impossible. Les languettes 33 sont judicieusement positionnées pour permettre à la fois la tenue mécanique du cadre 34 et la minimisation des fuites de gaz en son sein, et ces languettes 33 génèrent une discontinuité des cloisons étanches de verre 37, 38 remplissant les ouvertures 35, 36 dans la direction périphérique et/ou transversale du joint 30 incorporant ce cadre 34.

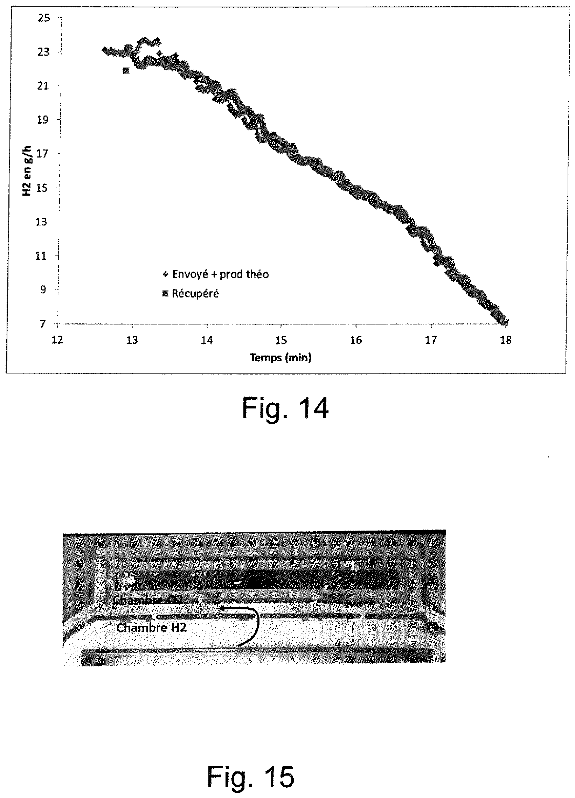

Comme le matériau préférentiellement utilisé pour ce cadre 34 (e.g. un mica) est poreux, chaque languette 33 peut être le siège d'une fuite de gaz dans l'épaisseur du cadre 34, ce qu'a démontré la Demanderesse à la photographie de la figure 15, En effet, cette figure 15 montre que plus la languette est petite, plus la section de passage pour les gaz sera petite et la fuite de ces gaz d'autant plus petite. Mais il convient de noter que les languettes 33 ne doivent pas être trop petites (i.e. pas trop fines ni trop étroites) pour ne pas se casser lors des manipulations du cadre 34. Dans ce contexte, la géométrie présentée à la figure 4 est un exemple de réalisation permettant de minimiser la largeur de chaque languette 33 pour minimiser les fuites dans le joint 30.

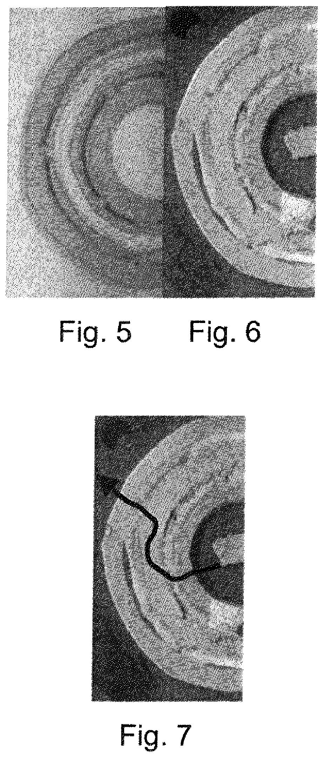

Comme illustré aux photographies des figures 5 à 7, un cadre pour joint selon l'invention est percé selon au minimum une ligne continue ou discontinue dans la direction périphérique (e.g. circonférentielle), et de préférence en de multiples lignes formant des canaux qui une fois remplis de verre (en blanc) définissent autant de cloisons étanches pour empêcher totalement le passage des gaz (voir figure 6). De plus, les languettes qui relient les canaux entre eux sont positionnées angulairement de manière décalée (i.e. en quinconce), de manière à maximiser la longueur de parcours du gaz dans le cadre (voir la flèche de la figure 7 illustrant schématiquement le parcours sinueux du gaz à travers ces languettes) et à augmenter les pertes de charge au sein du joint.

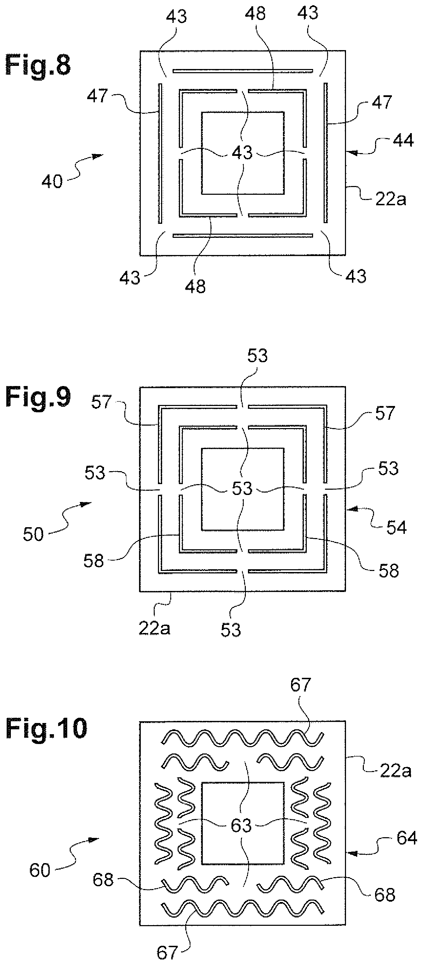

Ainsi et en référence aux figures 8 et 9, un joint 40 à cadre 44 réalisé selon l'exemple de la figure 8 avec des languettes 43 en quinconce ménagées entre des portions de cloisonnement étanche 47, 48 discontinues dans la direction périphérique, présente des résultats d'étanchéité aux gaz bien meilleurs à ceux d'un joint 50 à cadre 54 réalisé selon la figure 9 avec des languettes 53 radialement alignées entre des portions de cloisonnement étanche 57, 58 également discontinues.

Comme illustré à la figure 10, on peut prévoir en variante dans un cadre 64 d'un joint 60 selon l'invention plusieurs rangées de canaux globalement concentriques qui sont chacun en lignes non droites (e.g. brisées ou ondulées) avec des languettes 63 de liaison, pour augmenter la taille des cloisons étanches 67, 68 remplissant ces canaux et contrôler la résistance mécanique du cadre 64.

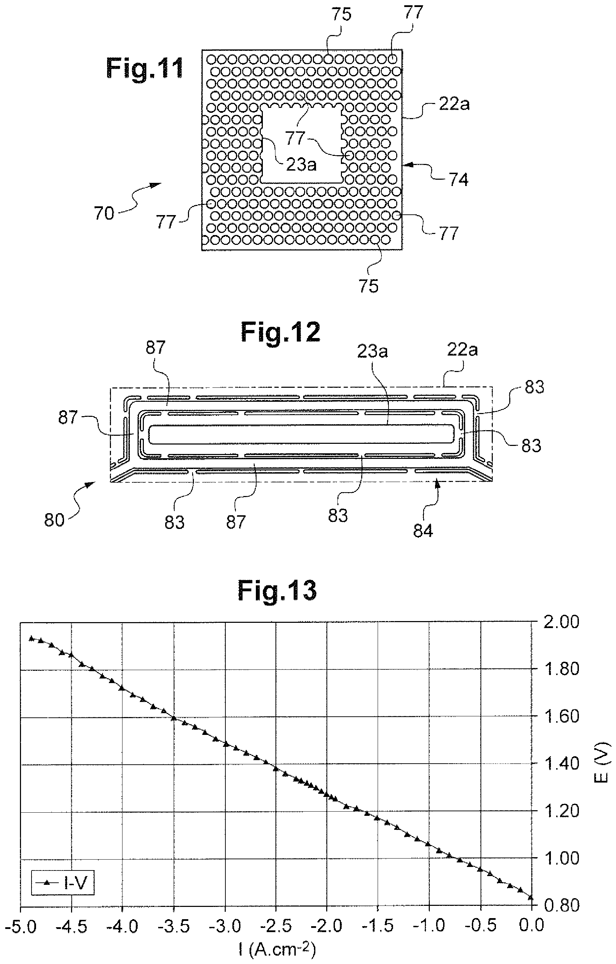

Comme illustré à la figure 11, au lieu d'avoir des lignes découpées on peut avoir un joint 70 à cadre 74 percé d'une multitude de trous transversaux 75 régulièrement espacés et par exempte de section circulaire. On remplit ces trous 75 de verre pour former autant de cloisons étanches 77 alignées par exemple suivant une multitude de rangées concentriques. Ces trous 75 présentent l'avantage d'être aisés à réaliser et à agencer sous forme de rangées régulières. La taille limite de chaque trou 75 est donnée par la capillarité du verre, qui doit remplir les trous 75 sans rester en surface.

En référence à l'ensemble des modes et exemples de réalisation précités de l'invention, on dépose avantageusement le moyen d'étanchéification utilisé à l'aide d'un robot et d'une seringue pneumatique sous forme d'une pâte de verre par exemple de type G018 qui est un mélange de poudre de verre commerciale (e.g. une poudre de verre de type Schott G018-311 mélangée à un solvant de type éthanol et à un liant de type terpinéol). On prépare la pâte de verre au laboratoire à partir de cette poudre de verre commercial, et or, la dépose sur des parties pleines du cadre entre deux perçages ce qui, d'une part, permet au verre de déborder dans les ouvertures ou canaux du cadre selon un débordement contrôlé et, d'autre part, facilite le dépôt et permet la manipulation du cadre après ce dépôt. On ne dépose pas le verre ailleurs, car il pourrait déborder dans les zones d'alimentation des gaz de l'empilement du dispositif électrochimique. Comme il est aisément manipulable, on peut facilement peser le cadre avant et après dépôt de la pâte de verre, ce qui permet de connaître facilement et précisément la quantité de verre ainsi déposée.

Cette quantité de verre déposée, qui correspond à la quantité nécessaire pour remplir les ouvertures ou canaux du cadre support, est calculée au plus juste. On calcule le volume des ouvertures ou canaux a remplir et l'on dépose la quantité exacte de verre nécessaire à ce remplissage.

Souvent, les tolérances sur les espacements entre interconnecteurs sont de l'ordre de 50 µm. Pour un cadre de mica sans trou, une incertitude de 50 µm de hauteur sur une hauteur de verre de 100 µm est très importante puisqu'elle est de 50 %, ce qui génère des débordements à des endroits non désirés. Avec les gorges de l'invention, comme le volume de verre déposé dans ces gorges est important, ces 50 µm vont conduire à seulement quelques % de verre en trop. Ainsi, la présente invention rend beaucoup moins critiques les variations de hauteur sur les chaînes de côtes.

La Demanderesse a par ailleurs réalisé des essais comparatifs non conformes à l'invention avec des parties découpées dans un cadre en mica non pas de manière traversante, mais en creux dans ce cadre (i.e. transversalement borgnes). Ces essais comparatifs ont donné pour le joint « témoin » ainsi obtenu remplissant ces parties en creux des résultats expérimentaux nettement moins bons, à savoir une résistance maximale à la pression de 0.2 bars seulement (soit 20000 Pa) et pas de tenue aux cycles thermiques.

Pour fabriquer un joint selon invention, on peut par exemple mettre en oeuvre les étapes successives suivantes :
- réalisation du cadre isolant électrique, e.g. une feuille de mica (par exemple de dénomination commerciale thermiculite 866® de la société Flexitallic) avec une épaisseur de feuille comprise entre 0,1 mm et plusieurs mm. En variante, ce cadre peut être constitué de n'importe quel autre matériau électriquement isolant usinable ;
- réalisation des ouvertures traversantes d'une face principale à l'autre de la feuille par découpe à la fraise, ou en variante par n'importe quel autre moyen donnant un bon état de surface comme par exemple au laser, à l'emporte pièce ou au cutter ;
- assemblage du cadre, de la pâte de verre et de la cellule (la pâte de verre est par exemple un mélange de poudre de verre Schott G018-311, d'un solvant de type éthanol et d'un liant de type terpinéol), étant précisé que le verre est déposé sur le cadre à l'aide d'un robot sur les zones comprises entre deux gorges pour la première face et qu'après séchage à l'air libre pendant quelques heures, on dépose le verre sur la seconde face :
- montage du joint ainsi obtenu au sein de l'empilement du dispositif électrochimique (voir figure 1) à une température de l'ordre de 900° C (cette température dépend du verre choisi, la gamme de température à utiliser étant donnée par le fabricant de verre) pour faire fondre le verre et le mettre en place. A cet effet, une charge de quelques kPa est appliquée sur l'empilement indifféremment avant ou après la mise en température pour mettre en place les éléments de contact 3 et 4 de la figure 1. Une faible part de cette charge sert à mettre le verre en place puisque, le verre étant peu rigide à ces températures, il n'offre qu'une très faible résistance à l'écrasement La charge est maintenue pendant toute la suite de l'essai, puis l'empilement est refroidi à sa température de fonctionnement (par exemple 800° C) pour permettre son fonctionnement.

On notera que l'utilisation d'un cadre selon une découpe déterminée permet d'obtenir de manière aisée un noyau supportant le moyen d'étanchéification à base de verre formant un joint selon l'invention, ce qui permet notamment de contrôler finement la hauteur de chaque cloison de verre en diminuant cette hauteur et, par conséquent, d'améliorer l'efficacité du joint en termes d'étanchéité aux gaz obtenue par rapport à celle obtenue avec des hauteurs de verre plus grandes.

De plus, l'utilisation d'un cadre support selon l'invention permet une alternance de barrières constituées d'une cloison de verre puis d'un composite verre-mica. La Demanderesse a démontré que ces barrières successives ont une action positive sur l'étanchéité aux gaz, en ce qu'elles permettent la perte d'une barrière sans perte d'étanchéité au niveau de l'ensemble du joint

La figure 12 illustre un essai selon l'invention réalisé sur un dispositif « SOEC » avec une cellule de 120 x 120 mm², qui a consisté à imposer un courant à un dispositif « SOEC » comportant cette cellule, laquelle était pourvue d'un joint 80 selon l'invention à cadre 84 intégrant une cloison étanche de verre 87 et des languettes 83. L'excellente. étanchéité obtenue a permis de faire parvenir 100 % des gaz envoyés à la cellule. Ainsi, on a obtenu la courbe courant/tension visible à la figure 13. Il est à noter que si une partie du gaz envoyé ne parvenait pas à la cellule, alors la courbe IV ne serait pas linéaire, contrairement à ce que montre la figure 13.

On a calculé aisément la quantité théorique de dihydrogène (N₂) produit en fonction du courant imposé, et l'on a mesuré la quantité de dihydrogène récupéré. Il s'avère que l'on a récupéré 100 % du dihydrogène produit même sous 500 mbar (soit 50000 Pa) de surpression, comme visible à la figure 14. On a réalisé cet essai sous plus de 200 mbars (soit plus de 20000 Pa) pendant plus de 400 heures de fonctionnement et l'on a maintenu l'étanchéité pendant cette durée sans qu'elle soit altérée. Les étanchéités obtenues étaient donc excellentes. De plus, ces étanchéités ont résisté à plus de 500 mbars (soit plus de 50000 Pa) de surpression pendant plusieurs heures. On a donc arrêté l'essai sans que ces 50000 Pa de surpression aient provoqué une perte d'étanchéité. Comme le montre la figure 14, on récupère 100 % du dihydrogène produit lors d'un essai IV sous 50000 Pa de surpression,

La Demanderesse a mis en évidence à la photographie de la figure 15 l'effet « barrière » du joint composite mica-verre selon cet exemple de l'invention lors du démontage de la cellule utilisée pour cet essai. On voit en effet à cette figure 15 que :
- le dihydrogéne colore le mica en gris/blanc. Ainsi, un mica blanc témoigne d'une atmosphère hydrogénée ; et que
- les deux chambres H₂ et O₂ sont bien étanches l'une par rapport à l'autre, puisque le dihydrogène passe la première barrière de verre dans la languette de maintien mais ne passe pas la deuxième barrière (si une fuite de dihydrogène avait existé, le mica aurait été entièrement coloré, le dihydrogène diffusant très facilement).

## Revendications

1. Joint d'étanchéité (13, 14, 15, 20, 30, 40, 50, 60, 70, 80) utilisable pour être monté au contact de deux portées métalliques (7, 8, 9, 10, 11, 12, 28 et 29) d'un dispositif électrochimique (1) en particulier de type pile à combustible à oxyde solide (« SOFC ») ou électrolyseur de vapeur d'eau à haute température à oxyde solide (« SOEC »), le joint comprenant :
- un moyen d'étanchéification (21) du joint comprenant au moins un matériau de type verre ou vitrocéramique, et
- un moyen de support (24, 34, 44, 54, 64, 74, 84) électriquement isolant qui supporte le moyen d'étanchéification et qui présente deux faces principales (22 et 23) parallèles, un bord périphérique externe (22a) et un bord périphérique interne (23a), le joint étant apte à être monté contre ces portées par ces faces principales, lesquelles sont recouvertes au moins partiellement du moyen d'étanchéification,
le moyen d'étanchéification cloisonnant le moyen de support entre ledit bord périphérique interne et ledit bord périphérique externe en s'étendant continûment de l'une desdites faces principales à l'autre à travers le moyen de support, de sorte que le moyen d'étanchéification relie directement ces portées l'une à l'autre **caractérisé en ce que** le moyen de support (24, 34, 44, 54, 64, 74, 84) comprend un cadre monobloc en un matériau poreux qui est usiné de sorte à définir des surfaces percées à travers le cadre formant au moins un canal traversant (25 et 26, 35 et 36) de géométrie prédéterminée recevant le moyen d'étanchéification (21), ledit au moins un canal rempli du moyen d'étanchéification formant au moins une cloison étanche (27, 37 et 38, 47 et 48, 57 et 58, 67 et 68, 77, 87) s'étendant continûment de l'une desdites faces principales (22) à l'autre (23).

2. Joint (13, 14, 15, 20, 30, 40, 50, 60, 70, 80) selon la revendication 1, **caractérisé en ce que** lesdites surfaces dudit au moins un canal (25 et 26, 35 et 36) sont globalement perpendiculaires auxdites faces principales (22 et 23) et s'étendent dans une direction périphérique globalement concentrique auxdits bords périphériques interne (23a) et externe (22a), de manière continue ou discontinue le long de ladite direction périphérique, des languettes (33, 43, 53, 63, 83) constituées dudit cadre (24, 34, 44, 54, 64, 74, 84) étant formées de part et d'autre dudit au moins un canal pour relier ce dernier au reste du cadre ou à un autre dit canal adjacent, chaque languette présentant un volume inférieur à celui dudit au moins un canal.

3. Joint (40, 60) selon la revendication 2, **caractérisé en ce que** lesdites languettes (43, 63) sont décalées angulairement radialement de part et d'autre dudit au moins un canal (25, 26), par exemple suivant un arrangement en quinconce, de sorte à maximiser la longueur du parcours de gaz distribués par des interconnecteurs (28 et 29) formés par lesdites portées et/ou les pertes de charge pour ces gaz à travers ledit matériau poreux dudit cadre (44, 64).

4. Joint (80) selon la revendication 2 ou 3, **caractérisé en ce que** ladite au moins une cloison étanche (87) s'étend de manière continue dans ladite direction périphérique, lesdites languettes (83) s'étendant de part et d'autre dudit au moins un canal respectivement vers ledit bord périphérique externe (22a) et vers ledit bord périphérique interne (23a).

5. Joint (20) selon la revendication 4, **caractérisé en ce qu'**il comprend au moins deux dites cloisons étanches (27) concentriques qui sont reliées deux à deux entre elles par des dites languettes radiales (83).

6. Joint (30, 40, 50, 60, 70) selon la revendication 2 ou 3, **caractérisé en ce que** ladite au moins une cloison étanche (47 et 48, 57 et 58, 67 et 68, 77) s'étend de manière discontinue dans ladite au moins une direction périphérique en formant une pluralité de portions de cloisonnement (47 et 48, 57 et 58, 67 et 68, 77).

7. Joint (30, 40, 50, 60) selon la revendication 6, **caractérisé en ce qu'**il comprend au moins deux dites cloisons étanches (47 et 48, 57 et 58, 67 et 68) formées chacune de ladite pluralité de portions de cloisonnement (47 et 48, 57 et 58, 67 et 68) logées dans des dits canaux traversant ledit cadre (34, 44, 54, 64) qui sont usinés suivant des géométries curvilignes, rectilignes, ondulées et/ou en forme de lignes brisées et qui sont remplis du moyen d'étanchéification (21), ces portions de cloisonnement étant reliées deux à deux entre elles dans la direction périphérique par lesdites languettes (33, 43, 53, 63).

8. Joint (70) selon la revendication 6, **caractérisé en ce qu'**il comprend une multitude de dites cloisons étanches (77) qui sont respectivement formées d'une multitude de trous (75) traversant ledit cadre (74) par exemple cylindriques, qui forment des dits canaux (75) usinés à intervalles réguliers entre ledit bord périphérique interne (23a) et ledit bord périphérique externe (22a) et qui sont remplis du moyen d'étanchéification (21).

9. Joint (13, 14, 15, 20, 30, 40, 50, 60, 70, 80) selon une des revendications précédentes, **caractérisé en ce que** le moyen d'étanchéification (21) est à base de verre ou de vitrocéramique, et **en ce que** le moyen de support (24, 34, 44, 54, 64, 74, 84) est constitué d'une feuille usinée en un matériau poreux choisi dans le groupe constitué par les céramiques poreuses et les minéraux poreux, de préférence le mica.

10. Procédé de fabrication et d'assemblage d'un joint (13, 14, 15, 20, 30, 40, 50, 60, 70, 80) selon une des revendications précédentes dans un dispositif électrochimique (1) en particulier de type pile à combustible à oxyde solide (« SOFC ») ou électrolyseur de vapeur d'eau à haute température à oxyde solide (« SOEC »), **caractérisé en ce que** le procédé comprend :
a) un usinage du moyen de support (24, 34, 44, 54, 64, 74, 84) pour percer ledit au moins un canal (25 et 26, 35 et 36) entre ledit bord périphérique interne (23a) et ledit bord périphérique externe (22a) qui s'étend continûment de l'une desdites faces principales (22) à l'autre (23) à travers le moyen de support,
b) un dépôt du moyen d'étanchéification (21), tel qu'une pâte de verre, sur lesdites faces principales et dans ledit au moins un canal pour l'obtention d'une ébauche du joint avant assemblage,
c) un assemblage du joint au sein d'un empilement d'au moins une cellule (2) du dispositif à une température comprise entre 600° C et 900° C et sous une pression appliquée de plusieurs kPa, pour faire fondre le moyen d'étanchéification tout en le mettant en place.

11. Dispositif électrochimique (1) de type pile à combustible à oxyde solide (« SOFC ») ou électrolyseur de vapeur d'eau à haute température à oxyde solide (« SOEC »), le dispositif comprenant :
- au moins une cellule (2) qui comprend un assemblage électrode à hydrogène-électrolyte-électrode à oxygène et qui délimite deux chambres (5 et 6),
- au moins deux éléments de contact électrique (3 et 4) avec ladite au moins une cellule respectivement positionnés en contact avec lesdites électrodes,
- au moins deux portées métalliques (7, 8, 9, 10, 11, 12, 28 et 29) formant des interconnecteurs qui distribuent dans ladite au moins une cellule un courant électrique et des gaz tels que de la vapeur d'eau, du dioxygène, du dihydrogène et éventuellement un gaz vecteur et qui, dans le cas de plusieurs dites cellules, assurent la jonction entre ces dernières, et
- des joints d'étanchéité (13, 14, 15, 20, 30, 40, 50, 60, 70, 80) qui sont chacun montés au contact d'une paire de dits interconnecteurs, **caractérisé en ce qu'**au moins l'un desdits joints est selon une des revendications 1 à 9.

12. Dispositif électrochimique (1) selon la revendication 11, **caractérisé en ce que** l'ensemble desdits joints (13, 14, 15, 20, 30, 40, 50, 60, 70, 80) sont électriquement isolants et comprennent des premiers joints (13) assurant l'étanchéité entre les chambres de ladite au moins une cellule (2), des deuxièmes joints (14) assurant l'étanchéité entre des amenées respectives de gaz d'entrée et de gaz de sortie et des troisièmes joints (15) assurant l'étanchéité de ladite au moins une cellule avec l'atmosphère extérieure, lesdits deuxièmes et troisièmes joints étant selon une des revendications 1 à 9.

## Patentansprüche

1. Dichtung (13, 14, 15, 20, 30, 40, 50, 60, 70, 80), verwendbar, um in Kontakt mit zwei metallischen Auflagen (7, 8, 9, 10, 11, 12, 28 und 29) einer elektrochemischen Vorrichtung (1), insbesondere vom Typ Festoxidbrennstoffzelle ("SOFC") oder Hochtemperatur-Wasserdampf-Elektrolysezelle mit Festoxid ("SOEC") montiert zu werden, wobei die Dichtung Folgendes umfasst:
- ein Mittel zum Abdichten (21) der Dichtung, das mindestens ein glas- oder glaskeramikartiges Material umfasst, und
- ein elektrisch isolierendes Trägermittel (24, 34, 44, 54, 64, 74, 84), welches das Dichtungsmittel trägt und das zwei parallele Hauptflächen (22 und 23), eine äußere Umfangskante (22a) und eine innere Umfangskante (23a) aufweist, wobei die Dichtung geeignet ist, durch diese Hauptflächen gegen diese Auflagen montiert zu werden, die zumindest teilweise mit dem Dichtungsmittel bedeckt sind,
wobei das Dichtungsmittel das Trägermittel zwischen der inneren Umfangskante und der äußeren Umfangskante unterteilt, indem es sich durchgehend von einer der Hauptflächen zur anderen durch das Trägermittel hindurch erstreckt, so dass das Dichtungsmittel diese Auflagen direkt miteinander verbindet, **dadurch gekennzeichnet, dass** das Trägermittel (24, 34, 44, 54, 64, 74, 84) einen einstückigen Rahmen aus porösem Material umfasst, der so bearbeitet ist, um durch den Rahmen durchbohrte Oberflächen zu definieren, die mindestens einen Durchgangskanal (25 und 26, 35 und 36) mit vorgegebener Geometrie bilden, welcher das Dichtungsmittel (21) aufnimmt, wobei der mindestens eine mit dem Dichtungsmittel befüllte Kanal mindestens eine Schottwand (27, 37 und 38, 47 und 48, 57 und 58, 67 und 68, 77, 87) bildet, die sich durchgehend von einer der Hauptflächen (22) zur anderen (23) erstreckt.

2. Dichtung (13, 14, 15, 20, 30, 40, 50, 60, 70, 80) nach Anspruch 1, **dadurch gekennzeichnet, dass** die Oberflächen des mindestens einen Kanals (25 und 26, 35 und 36) im Allgemeinen senkrecht zu den Hauptflächen (22 und 23) verlaufen und sich in einer Umfangsrichtung, die im Allgemeinen konzentrisch zu den inneren (23a) und äußeren (22a) Umfangskanten ist, kontinuierlich oder diskontinuierlich entlang der Umfangsrichtung, erstrecken, wobei aus dem Rahmen (24, 34, 44, 54, 64, 74, 84) zusammengesetzte Zungen (33, 43, 53, 63, 83) auf beiden Seiten des mindestens einen Kanals ausgebildet sind, um letzteren mit dem Rest des Rahmens oder mit einem anderen angrenzenden Kanal zu verbinden, wobei jede Zunge ein niedrigeres Volumen aufweist als das des mindestens einen Kanals.

3. Dichtung (40, 60) nach Anspruch 2, **dadurch gekennzeichnet, dass** die Zungen (43, 63) radial auf beiden Seiten des mindestens einen Kanals (25, 26), beispielsweise in einer versetzten Anordnung, winklig verschoben sind, um die Länge des Weges von Gasen zu maximieren, die durch die von den Auflagen ausgebildeten Verbindungsleitungen (28 und 29) und/oder die Druckverluste für diese Gase durch das poröse Material des Rahmens (44, 64) verteilt werden.

4. Dichtung (80) nach Anspruch 2 oder 3, **dadurch gekennzeichnet, dass** sich die mindestens eine Schottwand (87) kontinuierlich in die Umfangsrichtung erstreckt, wobei sich die Zungen (83) auf beiden Seiten des mindestens einen Kanals jeweils zu der äußeren Umfangskante (22a) und zu der inneren Umfangskante (23a) erstrecken.

5. Dichtung (20) nach Anspruch 4, **dadurch gekennzeichnet, dass** sie mindestens zwei der konzentrischen Schottwände (27) umfasst, die durch die radialen Zungen (83) paarweise miteinander verbunden sind.

6. Dichtung (30, 40, 50, 60, 70) nach Anspruch 2 oder 3, **dadurch gekennzeichnet, dass** sich die mindestens eine Schottwand (47 und 48, 57 und 58, 67 und 68, 77) diskontinuierlich in der mindestens einen Umfangsrichtung erstreckt, indem sie eine Vielzahl von Abschottungsabschnitten (47 und 48, 57 und 58, 67 und 68, 77) bildet.

7. Dichtung (30, 40, 50, 60) nach Anspruch 6, **dadurch gekennzeichnet, dass** sie mindestens zwei Schottwände (47 und 48, 57 und 58, 67 und 68) umfasst, die jeweils aus der Vielzahl von Abschottungsabschnitten (47 und 48, 57 und 58, 67 und 68) ausgebildet sind, die in den den Rahmen (34, 44, 54, 64) durchlaufenden Kanälen aufgenommen sind, die nach kurvenförmigen, geraden, welligen und/oder gestrichelten Liniengeometrien bearbeitet sind, und die mit dem Dichtungsmittel (21) befüllt sind, wobei diese Abschottungsabschnitte in Umfangsrichtung durch die Zungen (33, 43, 53, 63) paarweise untereinander verbunden sind.

8. Dichtung (70) nach Anspruch 6, **dadurch gekennzeichnet, dass** sie eine Vielzahl der Schottwände (77) umfasst, die jeweils durch eine Vielzahl von durch den Rahmen (74) verlaufenden, beispielsweise zylindrischen, Löchern (75) ausgebildet sind, welche in regelmäßigen Abständen zwischen der inneren Umfangskante (23a) und der äußeren Umfangskante (22a) bearbeitete Kanäle (75) bilden und die mit dem Dichtungsmittel (21) befüllt sind.

9. Dichtung (13, 14, 15, 20, 30, 40 50, 60, 70, 80) nach einem der vorstehenden Ansprüche, **dadurch gekennzeichnet, dass** das Dichtungsmittel (21) auf Glas oder Glaskeramik basiert, und dass das Trägermittel (24, 34, 44, 54, 64, 74, 84) aus einer aus einem porösen Material bearbeiteten Platte besteht, ausgewählt aus der Gruppe, bestehend aus poröser Keramik und porösen Mineralien, vorzugsweise Glimmer.

10. Verfahren zur Herstellung und Befestigung einer Dichtung (13, 14, 15, 20, 30, 40, 50, 60, 70, 80) nach einem der vorstehenden Ansprüche in einer elektrochemischen Vorrichtung (1), insbesondere vom Typ Festoxidbrennstoffzelle ("SOFC") oder Hochtemperatur-Wasserdampf-Elektrolysezelle mit Festoxid ("SOEC"), **dadurch gekennzeichnet, dass** das Verfahren Folgendes umfasst:
a) Bearbeitung des Trägermittels (24, 34, 44, 54, 64, 74, 84) zum Durchbohren des mindestens einen Kanals (25 und 26, 35 und 36) zwischen der inneren Umfangskante (23a) und der äußeren Umfangskante (22a), die sich durch das Trägermittel durchgehend von einer der Hauptflächen (22) zu der anderen (23) erstreckt,
b) Abscheidung des Dichtungsmittels (21), wie beispielsweise einer Glaspaste, auf den Hauptflächen und in dem mindestens einen Kanal, um einen Rohling der Dichtung vor der Befestigung zu erhalten,
c) Befestigung der Dichtung innerhalb eines Stapels von mindestens einer Zelle (2) der Vorrichtung bei einer Temperatur zwischen 600° C und 900° C und unter einem angewandten Druck von mehreren kPa, um das Dichtungsmittel beim Anbringen zu schmelzen.

11. Elektrochemische Vorrichtung (1) vom Typ Festoxidbrennstoffzelle ("SOFC") oder Hochtemperatur-Wasserdampf-Elektrolysezelle mit Festoxid ("SOEC"), wobei die Vorrichtung Folgendes umfasst:
- mindestens eine Zelle (2), die eine Elektrodenbaugruppe mit Wasserstoff-Elektrolyt-Elektrode mit Sauerstoff umfasst und die zwei Kammern (5 und 6) begrenzt,
- mindestens zwei elektrische Kontaktelemente (3 und 4), wobei die mindestens eine Zelle mit den Elektroden jeweils in Kontakt gebracht ist,
- mindestens zwei metallische Auflagen (7, 8, 9, 10, 11, 12, 28 und 29), die Verbindungsleitungen bilden, die in der mindestens einen Zelle einen elektrischen Strom und Gase wie Wasserdampf, Disauerstoff, Diwasserstoff und gegebenenfalls ein Trägergas verteilen, und die im Falle von mehreren der Zellen für die Dichtung zwischen diesen letzteren sorgen, und
- Dichtungen (13, 14, 15, 20, 30, 40, 50, 60, 70, 80), die jeweils mit einem Paar der Verbindungsleitungen in Kontakt montiert sind,
**dadurch gekennzeichnet, dass** mindestens eine der Dichtungen nach einem der Ansprüche 1 bis 9 ist.

12. Elektrochemische Vorrichtung (1) nach Anspruch 11, **dadurch gekennzeichnet, dass** die Einheit der Dichtungen (13, 14, 15, 20, 30, 40, 50, 60, 70, 80) elektrisch isolierend sind und erste Dichtungen (13) umfassen, welche für die Abdichtung zwischen den Kammern der mindestens einen Zelle (2) sorgen, wobei die zweiten Dichtungen (14) für die Abdichtung zwischen den jeweiligen Ein- und Auslassgaszuführungen sorgen und dritte Dichtungen (15) für die Abdichtung der mindestens einen Zelle mit der äußeren Atmosphäre sorgen, wobei die zweiten und dritten Dichtungen nach einem der Ansprüche 1 bis 9 sind.

## Claims

1. A seal gasket (13, 14, 15, 20, 30, 40, 50, 60, 70, 80) which may be used for being mounted in contact with two metal spans (7, 8, 9, 10, 11, 12, 28 and 29) of an electrochemical device (1) in particular of the solid oxide fuel cell (SOFC) type or solid oxide high temperature steam electrolyzer (SOEC) type, the gasket comprising:
- a sealing means (21) of the gasket comprising at least one material of the glass or vitroceramic type, and
- a supporting means (24, 34, 44, 54, 64, 74, 84) electrically insulating, which supports the sealing means and which has two main parallel faces (22 and 23), an external peripheral edge (22a) and an internal peripheral edge (23a), the gasket being able to be mounted against these spans through these main faces, which are at least partly covered with the sealing means,
the sealing means partitions the supporting means between said internal peripheral edge and said external peripheral edge by continuously extending from one of said main faces to the other through the supporting means, so that the sealing means directly connects these spans to each other **characterized in that** the supporting means (24, 34, 44, 54, 64, 74, 84) comprises a one-piece frame in a porous material which is machined so as to define perforated surfaces through the frame forming at least one through-channel (25 and 26, 35 and 36) with a predetermined geometry receiving the sealing means (21), said at least one channel filled with the sealing means forming at least one sealed partition (27, 37 and 38, 47 and 48, 57 and 58, 67 and 68, 77, 87) continuously extending from one of said main faces (22) to the other (23).

2. The gasket (13, 14, 15, 20, 30, 40, 50, 60, 70, 80) according to claim 1, **characterized in that** said surfaces of said at least one channel (25 and 26, 35 and 36) are globally perpendicular to said main faces (22 and 23) and extend in a peripheral direction globally concentric with said internal (23a) and external (22a) peripheral edges, continuously or discontinuously along said peripheral direction, tabs (33, 43, 53, 63, 83) consisting of said frame (24, 34, 44, 54, 64, 74, 84) being formed on either side of said at least one channel for connecting the latter to the remainder of the frame or to another so called adjacent channel, each tab having a volume of less than the one of said at least one channel.

3. The gasket (40, 60) according to claim 2, **characterized in that** said tabs (43, 63) are angularly shifted radially on either side of said at least one channel (25, 26), for example along a staggered arrangement, so as to maximize the length of the path of gases distributed by interconnectors (28 and 29) formed by said spans and/or the pressure drops for these gases through said porous material of said frame (44, 64).

4. The gasket (80) according to claim 2 or 3, **characterized in that** said at least one sealed partition (87) extends continuously in said peripheral direction, said tabs (83) extending on either side of said at least one channel respectively towards said external peripheral edge (22a) and towards said internal peripheral edge (23a).

5. The gasket (20) according to claim 4, **characterized in that** it comprises at least two said concentric seal partitions (27) which are connected pairwise to each other through said radial tabs (83).

6. The gasket (30, 40, 50, 60, 70) according to claim 2 or 3, **characterized in that** said at least one sealed partition (47 and 48, 57 and 58, 67 and 68, 77) extends discontinuously in said at least one peripheral direction while forming a plurality of partitioning portions (47 and 48, 57 and 58, 67 and 68, 77).

7. The gasket (30, 40, 50, 60) according to claim 6, **characterized in that** it comprises at least two so called sealed partitions (47 and 48, 57 and 58, 67 and 68) each formed with said plurality of partitioning portions (47 and 48, 57 and 58, 67 and 68) accommodated in said channels crossing said frame (34, 44, 54, 64) which are machined according to curvilinear, rectilinear, undulated geometries and/or as broken lines and which are filled with the sealing means (21), these partitioning portions being connected pair wise with each other in the peripheral direction through said tabs (33, 43, 53, 63).

8. The gasket (70) according to claim 6, **characterized in that** it comprises a multitude of said sealed partitions (77) which are respectively formed with a multitude of holes (75) crossing said frame (74), for example cylindrical holes, which form said channels (75) machined at regular intervals between said internal peripheral edge (23a) and said external peripheral edge (22a) and which are filled with the sealing means (21).

9. The gasket (13, 14, 15, 20, 30, 40, 50, 60, 70, 80) according to one of the preceding claims, **characterized in that** the sealing means (21) is based on glass or vitroceramic, and **in that** the supporting means (24, 34, 44, 54, 64, 74, 84) consist of a machined sheet in a porous material selected from the group formed by porous ceramics and porous minerals, preferably mica.

10. A method for manufacturing and assembling a gasket (13, 14, 15, 20, 30, 40, 50, 60, 70, 80) according to one of the preceding claims in an electrochemical device (1) in particular of the solid oxide fuel cell (SOFC) type or solid oxide high temperature steam electrolyzer (SOEC) type, **characterized in that** the method comprises:
a) machining of the supporting means (24, 34, 44, 54, 64, 74, 84) for perforating said at least one channel (25 nd 26, 35 and 36) between said internal peripheral edge (23a) and said external peripheral edge (22a) which continuously extends from one of said main faces (22) to the other (23) through the supporting means,
b) depositing the sealing means (21), such as a glass paste, onto said main faces and in said at least one channel for obtaining a blank of the gasket before assembling.
c) assembling the gasket within a stack of at least one cell (2) of the device at a temperature comprised between 600°C and 900°C and under an applied pressure of several kPa, in order to melt the sealing means while setting it into place.

11. An electrochemical device (1) of the solid oxide fuel cell (SOFC) type or solid oxide high temperature steam electrolyzer (SOEC) type, the device comprising:
- at least one cell (2) which comprises a hydrogen electrode-electrolyte-oxygen electrode assembly and which delimits two chambers (5 and 6),
- at least two electric contact elements (3 and 4) with said at least one cell respectively positioned in contact with said electrodes,
- at least two metal spans (7, 8, 9, 10, 11, 12, 28 and 29) forming interconnectors which distribute into said at least one cell an electric current and gases such as steam, dioxygen, dihydrogen and optionally a carrier gas and which, in the case of several of said cells, ensure the junction between the latter, and
- seal gaskets (13, 14, 15, 20, 30, 40, 50, 60, 70, 80) which are each mounted in contact with a pair of said interconnectors,
**characterized in that** at least one of said gaskets is according to one of claims 1 to 9.

12. The electrochemical device (1) according to claim 11, **characterized in that** the whole of said gaskets (13, 14, 15, 20, 30, 40, 50, 60, 70, 80) are electrically insulating and comprise first gaskets (13) ensuring the seal between the chambers of said at least one cell (2), second gaskets (14) ensuring the seal between respective supplies of inlet gases and outlet gases and third gaskets (15) ensuring the seal of said at least one cell with the outer atmosphere, said second and third gaskets being according to one of claims 1 to 9.
